# EUROPEAN PATENT APPLICATION

(11) **EP 4 156 403 A1**
(43) Date of publication of application: **29.03.2023**
(21) Application number: 20942058.7
(22) Date of filing: 23.06.2020
(51) Int. Cl.: H01M 50/50, H01M 50/10, H01M 50/147

(54) **BATTERY, ELECTRONIC DEVICE, AND BATTERY ASSEMBLING METHOD**

(71) Applicant: Ningde Amperex Technology Ltd., Ningde, Fujian 350900 (CN)
(72) Inventor: TANG, Chunjun, Ningde City, Fujian Province 352106 (CN); WEN, Qingshan, Ningde City, Fujian Province 352106 (CN)
(74) Representative: Icosa
(86) International application number: PCT/CN2020/097801
(87) International publication number: WO 2021/258304

(57) **Abstract**

This application provides a battery, including a packaging case and a cell assembly, where the packaging case includes a cover, and the cell assembly is provided in the packaging case. The battery further includes a first adapter, where the first adapter is connected to the cover. The cell assembly includes a first tab, where the first tab protrudes outward from a side of the cell assembly. The first tab is electrically connected to the first adapter, and the first tab and the first adapter are bent toward an outer surface of the cell assembly. In the foregoing battery, a connection structure of a tab has been changed to the outside of the cell assembly by using the first adapter, and the tab and the first adapter are directly bent to the outer surface of the cell assembly, simplifying connection and bending, and reducing operation difficulty. This application further provides an electronic apparatus with such battery and a method for assembling such battery.

## Description

### TECHNICAL FIELD

This application relates to the battery field, and in particular, to a battery and an electronic apparatus provided with such battery.

### BACKGROUND

In the process of battery manufacturing, battery cell tabs are required to be electrically connected to a battery housing. According to existing technologies, battery cell tabs are generally directly welded to the inside of the battery housing. To spare space for welding operations, a sufficient length needs to be reserved for each tab. The extra length of each tab is bent into a gap between the battery housing and the battery cell, resulting in poor ease of operation and a not fully controllable final state of the tab. In addition, the bending of tabs in the gap is accompanied with motion of the housing relative to the tabs and interaction between two tabs, requiring precise control of bending positions and bending angles. Otherwise, the tabs will easily be damaged because of being pulled, leading to a lower battery yield rate.

### SUMMARY

In view of the foregoing conditions, this application provides a battery with tabs provided at the outside and bending being simplified, and an electronic apparatus provided with such battery.

An embodiment of this application provides a battery, including a packaging case and a cell assembly, where the packaging case includes a cover, and the cell assembly is provided in the packaging case. The battery further includes a first adapter, where the first adapter is connected to the cover. The cell assembly includes a first tab, where the first tab protrudes outward from a side of the cell assembly, the first tab is electrically connected to the first adapter, and the first tab and the first adapter are bent toward an outer surface of the cell assembly.

Further, the battery further includes a first pole, and the cover is provided with a first through hole, where the first pole is mounted in the first through hole and insulated from the cover, and the first adapter is electrically connected to the first pole and the first tab.

Further, the battery includes a second adapter, and the cell assembly further includes a second tab, where the second adapter is electrically connected to the second tab and the cover, and the second tab and the second adapter are bent toward the outer surface of the cell assembly.

In an optional embodiment, the battery further includes a second pole, and the cover is provided with a second through hole, where the second pole is mounted in the second through hole and insulated from the cover; and the battery includes a second adapter, and the cell assembly further includes a second tab, where the second adapter is electrically connected to the second pole and the second tab.

In an optional embodiment, the first adapter is electrically connected to the cover.

Further, the packaging case further includes a housing, where the housing is insulated from the cover, the battery includes a second adapter, and the cell assembly further includes a second tab, where the second adapter is electrically connected to the second tab and the housing.

In an optional embodiment, the battery further includes a first insulator, where the first insulator is provided between the first adapter and the cover.

Further, the first insulator is provided with a through groove, and the first pole runs through the through groove and is connected to the first adapter.

In an optional embodiment, the battery further includes a second insulator provided between the first tab and an outer surface of the cell assembly.

An embodiment of this application provides an electronic apparatus, including a circuit component and the battery according to any one of the foregoing embodiments, where the circuit component is electrically connected to the battery.

An embodiment of this application further provides a battery assembling method, for manufacturing the battery according to any one of the foregoing embodiments, where the battery assembling method includes:
connecting the first adapter to the cover and having the first adapter protruding from the cover;
disposing the cover at an end face of the cell assembly, with the first tab parallel to the end face of the cell assembly and protruding outward;
electrically connecting an end of the first adapter protruding from the cover to an end of the first tab protruding from the cell assembly; and
bending the first adapter and the first tab toward the outer surface of the cell assembly.

Further, before the step of "bending the first adapter and the first tab toward the direction of the outer surface of the cell assembly", the battery assembling method further includes: disposing the second insulator between the first tab and the outer surface of the cell assembly.

Further, the battery assembling method includes: connecting the second adapter to the cover and having the second adapter protruding from the cover; having the second tab parallel to an end face of the cell assembly and protruding outward; and connecting an end of the second adapter protruding from the cover to an end of the second tab protruding from a side of the cell assembly, and bending the two ends toward the outer surface of the cell assembly.

In the foregoing battery, a connection structure of a tab has been changed to the outside of the cell assembly by using the first adapter, and the tab and the first adapter are directly bent to the outer surface of the cell assembly, simplifying welding and bending, reducing operation difficulty, keeping the final state of the tab controllable, and reducing pulling of the tab.

### BRIEF DESCRIPTION OF DRAWINGS

FIG. 1 is an exploded schematic structural diagram of a battery in an embodiment.
FIG. 2 is a schematic structural diagram of a cover of the battery in FIG. 1 when viewed in another direction.
FIG. 3 is a schematic structural diagram of a battery before a tab is bent.
FIG. 4 is a schematic structural diagram of a battery after a tab is bent.
FIG. 5 is a structural block diagram of an electronic apparatus in an embodiment.

Reference signs of main components:

| | |
|---|---|
| battery | 100 |
| cell assembly | 10 |
| first tab | 11 |
| second tab | 12 |
| Side | 13 |
| end face | 14 |
| first pole | 21 |
| cover | 22 |
| first through hole | 221 |
| first adapter | 30 |
| second adapter | 40 |
| first insulator | 50 |
| through groove | 51 |
| second insulator | 60 |
| electronic apparatus | 200 |
| circuit component | 201 |

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application.

It should be noted that when a component is referred to as being "fixed to" another component, it may be directly fixed to the another component, or there may be a component in between. When a component is deemed as being "connected to" another component, it may be directly connected to the another component, or there may be a component in between. When a component is deemed as being "provided on" another component, it may be directly provided on the another component, or there may be a component in between. The terms "vertical", "horizontal", "left", "right", and other similar expressions as used herein are for illustration only.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application. The term "and/or" used herein includes any and all combinations of one or more related listed items.

An embodiment of this application provides a battery, including a packaging case and a cell assembly, where the packaging case includes a cover, and the cell assembly is provided in the packaging case. The battery further includes a first adapter, where the first adapter is connected to the cover. The cell assembly includes a first tab, where the first tab protrudes outward from a side of the cell assembly. The first tab is electrically connected to the first adapter, and the first tab and the first adapter are bent toward an outer surface of the cell assembly.

In the foregoing battery, a connection structure of a tab has been changed to the outside of the cell assembly by using the first adapter, and the tab and the first adapter are directly bent to the outer surface of the cell assembly, simplifying welding and bending, reducing operation difficulty, keeping the final state of the tab controllable, and reducing pulling of the tab.

Some embodiments of this application are described in detail. In absence of conflicts, the following embodiments and features in the embodiments may be combined.

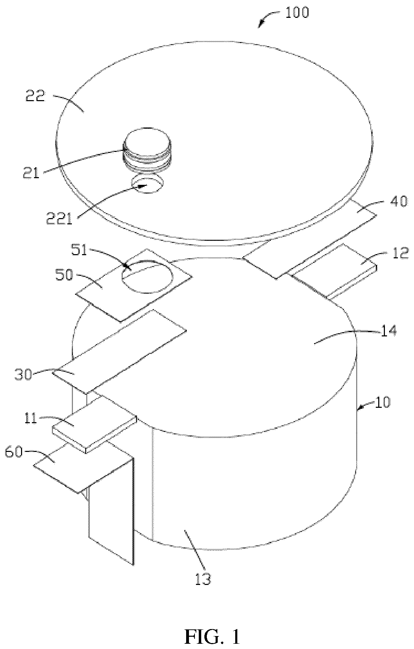

Referring to FIG. 1, in one of the embodiments of this application, a battery 100 includes a packaging case and a cell assembly 10. The packaging case includes a cover 22, and the cell assembly 10 is provided in the packaging case. The battery 100 further includes a first adapter 30, where the first adapter 30 is connected to the cover 22 and protrudes from the cover 22. The cell assembly 10 includes a first tab 11, where the first tab 11 protrudes outward from a side of the cell assembly 10. The first tab 11 is electrically connected to the first adapter 30, and the first tab 11 and the first adapter 30 are bent toward an outer surface of the cell assembly 10, so that the first tab 11 and the first adapter 30 are located at a side 13 of the cell assembly 10. In this embodiment of this application, the outer surface of the cell assembly 10 is the side 13, and the first tab 11 and the first adapter 30, after being welded, are bent toward the side 13 together.

In this embodiment of this application, the cell assembly 10 is roughly cylindrical. In other embodiments, the cell assembly 10 may be cuboid, irregular, or the like. This application is not limited thereto. The cell assembly 10 may be a wound cell or a laminated cell, and the outermost layer of the battery cell is a negative electrode plate.

Further, the battery 100 further includes a first pole 21, and the cover 22 is provided with a first through hole 221, where the first pole 21 is mounted in the first through hole 221 and insulated from the cover 22, the first adapter 30 is electrically connected to the first pole 21 and the first tab 11, and a second adapter 40 is electrically connected to the cover 22 and a second tab 12, so that the first pole 21 becomes a positive electrode of the battery 100 and the cover 22 becomes a negative electrode of the battery 100. It may be understood that the first pole 21 may become a negative electrode of the battery 100 and the cover 22 may become a positive electrode of the battery 100 in other embodiments. This application is not limited thereto.

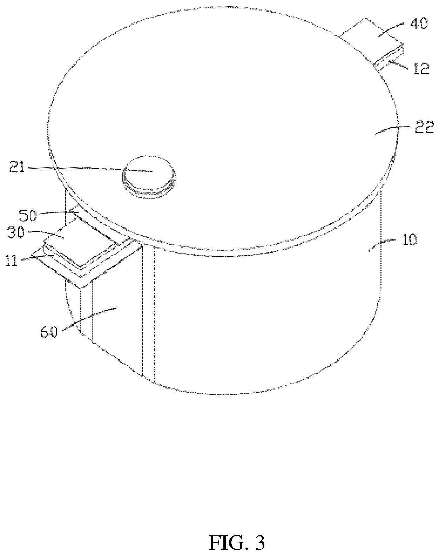

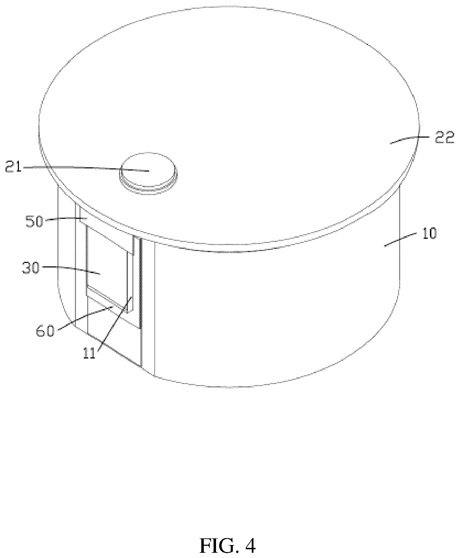

Referring to FIG. 3 and FIG. 4, the cover 22 is provided at an end face 14 of the cell assembly 10, the first tab 11 is parallel to the end face 14 of the cell assembly 10, the first adapter 30 is parallel to the first tab 11, and an end of the first adapter 30 protruding from the cover 22 and an end of the first tab 11 protruding from a side of the cell assembly 10 are connected and then bent toward the side 13 of the cell assembly 10, such that a welding position of the first tab 11 and the first adapter 30 is changed from the inside of the cover 22 to the outside of the cell assembly 10, reducing welding difficulty, simplifying bending, reducing manufacturing costs, and improving production efficiency. In addition, compared to a traditional structural design with tabs connected to the inside of the cover 22, in this application, tabs are attached to the outer surface of the cell assembly 10 by one bending, avoiding pulling of the tabs caused by motion of the packaging case, reducing manufacturing difficulty of the battery 100, and achieving a higher battery yield rate.

Further, in a direction of the first adapter 30 protruding from the cover 22, a length of the first adapter 30 is greater than a length of the first tab 11, and the end of the first adapter 30 protruding from the cover 22 is aligned with the end of the first tab 11 protruding from a side of the cell assembly 10. In a direction vertical to that of the first adapter 30 protruding from the cover 22, a width of the first adapter 30 is less than or equal to a width of the first tab 11, facilitating welding of the first tab 11 to the first adapter 30.

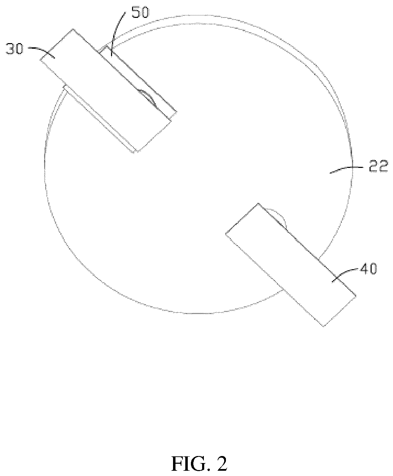

Referring to FIG. 1 and FIG. 2, in one of the embodiments of this application, the battery 100 includes a second adapter 40, and the cell assembly 10 further includes a second tab 12, where the second adapter 40 is electrically connected to the second tab 12 and the cover 22. For ease of connection to the cover 22, the first tab 11 and the second tab 12 are spaced apart at the end face 14 of the cell assembly 10, helping to shorten the lengths of the tabs, thereby achieving a higher energy density of the battery 100. The polarities of the first tab 11 and the second tab 12 are opposite. In this embodiment of this application, the first tab 11 is a positive tab, and the second tab 12 is a negative tab. The first tab 11 and the second tab 12 are spaced apart at sides of the end face 14 of the cell assembly 10, and protrude outward from the sides of the end face 14. The second adapter 40 also protrudes from the cover 22, and an end of the second tab 12 protruding from a side of the cell assembly 10 and an end of the second adapter 40 protruding from the cover 22 are welded and then bent toward the outer surface of the cell assembly 10, so that the second tab 12 and the second adapter 40 are located at the outer surface of the cell assembly 10.

In an extended embodiment, the battery 100 further includes a second pole (not shown in the figure), with a polarity opposite to that of the first pole 21. The cover 22 is provided with a second through hole (not shown in the figure), and the second pole is mounted in the second through hole and insulated from the cover 22. The second adapter 40 is electrically connected to the second pole and the second tab 12.

In an optional embodiment, the first adapter 30 may be electrically connected to the cover 22, and the packaging case further includes a housing (not shown in the figure), where the cell assembly 10 is provided in the housing, and the housing is insulated from the cover 22. The second adapter 40 is electrically connected to the second tab 12 and the housing.

In one of the embodiments of this application, to prevent a short circuit caused by contact between the first tab 11 and first adapter 30 and the cover 22, the battery 100 further includes a first insulator 50. The first insulator 50 is provided between the first adapter 30 and the cover 22 to separate the first adapter 30 from the cover 22. A width of the first insulator 50 may be greater than or equal to that of the first adapter 30, and a length of the first insulator 50 may be greater than or equal to that of the first adapter 30 covered by the cover 22, to effectively prevent a short circuit caused by contact between the first adapter 30and the cover 22. Further, the first insulator 50 is provided with a through groove 51, and the first pole 21 runs through the through groove 51 and is connected to the first adapter 30.

Referring to FIG. 1, FIG. 3, and FIG. 4 again, in an optional embodiment, as the outer surface of the cell assembly 10 is a negative electrode and the first tab 11 is a positive tab, to prevent a short circuit caused by contact between the first tab 11 and the outer surface of the cell assembly 10, the battery 100 further includes a second insulator 60. The second insulator 60 is roughly L-shaped, may be made of insulating hot melt adhesive, insulating double-sided adhesive, or the like, and is provided between the first tab 11 and the outer surface of the cell assembly 10. Specifically, the second insulator 60 is attached to a surface of the first tab 11 in a side back away from the first adapter 30 and the side 13 of the cell assembly 10. After the first tab 11 is bent, the second insulator 60 is sandwiched between the first tab 11 and the side 13 of the cell assembly 10. The width and length of the second insulator 60 are greater than those of the first tab 11, to effectively prevent direct contact between the first tab 11 and the side 13. As the second tab 12 is a negative tab, the second tab 12 may be directly bent and attached to a side of the cell assembly 10 after being welded to the second adapter 40. After the first tab 11 and the second tab 12 are bent, adhesive may be applied on the side 13 of the cell assembly 10 to fasten the first tab 11 and the second tab 12 to the side 13 of the cell assembly 10.

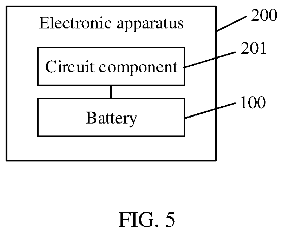

Referring to FIG. 5, one of the embodiments of this application provides an electronic apparatus 200, including the battery 100 in any one of the foregoing embodiments and a circuit component 201 electrically connected to the battery 100. Optionally, the battery 100 may be a small battery such as a button cell, and the electronic apparatus 200 may be a small electronic product such as an earphone.

An embodiment of this application further provides a battery assembling method, for manufacturing the battery 100 in any one or a combination of the foregoing embodiments. The battery assembling method includes: connecting the first adapter 30 to the cover 22 and having the first adapter 30 protruding from the cover 22; disposing the cover 22 at the end face 14 of the cell assembly 10, with the first tab 11 parallel to the end face 14 of the cell assembly 10 and protruding outward; electrically connecting an end of the first adapter 30 protruding from the cover 22 to an end of the first tab 11 protruding from the cell assembly 10; and bending the first adapter 30 and the first tab 11 toward the outer surface of the cell assembly 10, so that the first tab 11 and the first adapter 30 are located at a side of the cell assembly 10.

Further, the first adapter 30 is electrically connected to the first pole 21 on the cover 22 and the first tab 11, and the first insulator 50 is provided between the first adapter 30 and the cover 22 to prevent a short circuit caused by contact between the first adapter 30 and the cover 22. Before the bending the first adapter 30 and the first tab 11 toward the outer surface of the cell assembly 10, the battery assembling method further includes: disposing the second insulator 60 between the first tab 11 and the outer surface of the cell assembly 10, to prevent a short circuit caused by contact between the first tab 11 and the outer surface of the cell assembly 10. Specifically, the second insulator 60 is attached to a surface of the first tab 11 in a side back away from the first adapter 30 and the side 13 of the cell assembly 10. After the first tab 11 and the first adapter 30 are bent, the second insulator 60 is sandwiched between the first tab 11 and the side 13 of the cell assembly 10.

In an optional embodiment, the battery assembling method further includes: connecting a second adapter 40 to the cover 22 and having the second adapter 40 protruding from the cover 22; before the disposing the cover 22 at the end face 14 of the cell assembly 10, having the second tab 12 parallel to the end face 14 of the cell assembly 10 and protruding outward; and connecting an end of the second adapter 40 protruding from the cover 22 to an end of the second tab 12 protruding from the cell assembly 10, and bending the two ends toward the outer surface of the cell assembly 10, so that a joint between the second tab 12 and the second adapter 40 is disposed at the outer surface of the cell assembly 10.

The foregoing embodiments are merely intended to describe the technical solutions of this application, but not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

## Claims

1. A battery, comprising:
a packaging case, comprising a cover; and
a cell assembly, provided in the packaging case; **characterized in that**
the battery further comprises a first adapter, wherein the first adapter is connected to the cover; and
the cell assembly comprises a first tab, wherein the first tab protrudes outward from a side of the cell assembly, the first tab is electrically connected to the first adapter, and the first tab and the first adapter are bent toward an outer surface of the cell assembly.

2. The battery according to claim 1, **characterized in that** the battery further comprises a first pole, and the cover is provided with a first through hole, wherein the first pole is mounted in the first through hole and insulated from the cover, and the first adapter is electrically connected to the first pole and the first tab.

3. The battery according to claim 2, **characterized in that** the battery comprises a second adapter, and the cell assembly further comprises a second tab, wherein the second adapter is electrically connected to the second tab and the cover, and the second tab and the second adapter are bent toward the outer surface of the cell assembly.

4. The battery according to claim 2, **characterized in that** the battery further comprises a second pole, and the cover is provided with a second through hole, wherein the second pole is mounted in the second through hole and insulated from the cover; and
the battery comprises a second adapter, and the cell assembly further comprises a second tab, wherein the second adapter is electrically connected to the second pole and the second tab.

5. The battery according to claim 1, **characterized in that** the first adapter is electrically connected to the cover.

6. The battery according to claim 5, **characterized in that**
the packaging case further comprises a housing, wherein the housing is insulated from the cover; and the battery comprises a second adapter, and the cell assembly further comprises a second tab, wherein the second adapter is electrically connected to the second tab and the housing.

7. The battery according to claim 2, **characterized in that** the battery further comprises a first insulator, wherein the first insulator is provided between the first adapter and the cover.

8. The battery according to claim 7, **characterized in that** the first insulator is provided with a through groove, and the first pole runs through the through groove and is connected to the first adapter.

9. The battery according to claim 1, **characterized in that** the battery further comprises a second insulator provided between the first tab and the outer surface of the cell assembly.

10. An electronic apparatus, comprising a circuit component and a battery, **characterized in that** the battery is the battery according to any one of claims 1 to 9, and the circuit component is electrically connected to the battery.

11. A battery assembling method for manufacturing the battery according to any one of claims 1 to 9, **characterized in that** the battery assembling method comprises:
connecting the first adapter to the cover and having the first adapter protruding from the cover;
disposing the cover at an end face of the cell assembly, with the first tab parallel to the end face of the cell assembly and protruding outward;
electrically connecting an end of the first adapter protruding from the cover to an end of the first tab protruding from the cell assembly; and
bending the first adapter and the first tab toward the outer surface of the cell assembly.

12. The battery assembling method according to claim 11, **characterized in that**, before the step of bending the first adapter and the first tab toward the outer surface of the cell assembly, the battery assembling method further comprises:
disposing the second insulator between the first tab and the outer surface of the cell assembly.

13. The battery assembling method according to claim 11, **characterized by** further comprising:
connecting the second adapter to the cover and having the second adapter protruding from the cover;
having the second tab parallel to an end face of the cell assembly and protruding outward; and
connecting an end of the second adapter protruding from the cover to an end of the second tab protruding from the cell assembly, and bending the two ends toward the outer surface of the cell assembly.
